# EUROPÄISCHE PATENTSCHRIFT

(11) **EP 2 332 491 B1**
(45) Veröffentlichungstag und Bekanntmachung des Hinweises auf die Patenterteilung: **27.05.2020**
(21) Anmeldenummer: 10194590.5
(22) Anmeldetag: 10.12.2010
(51) Int. Cl.: A61C 13/15, H01L 33/60, H01L 33/64

(54) **Lichthärtgerät für Dentalzwecke**
Light hardening device for dental purposes
Appareil de durcissement à la lumière à des fins dentaires

(30) Priorität: 10.12.2009 EP 09178725
(43) Veröffentlichungstag der Anmeldung: 15.06.2011
(73) Patentinhaber: Ivoclar Vivadent AG, 9494 Schaan (LI)
(72) Erfinder: Senn, Bruno, 9470 Buchs (CH); Benz, Oliver, 9487 Gamprin (LI)
(74) Vertreter: Baronetzky, Klaus

(56) Entgegenhaltungen:
- EP-A1- 1 710 846
- EP-A1- 2 332 490
- US-A1- 2005 231 983
- US-A1- 2008 054 288
- US-B2- 7 300 175

## Beschreibung

Die Erfindung betrifft eine Lichthärtgerät für Dentalzwecke, gemäß dem Oberbegriff von Anspruch 1.

Aus der US 2005/231983 A1, auf deren Offenbarung die zweiteilige Form des Anspruchs 1 basiert, ist ein Lichthärtgerät für Dentalzwecke mit je von Reflektorkörpern umgebenen Chips auf einem gemeinsamen Substrat bekannt.

Ein derartiges Lichthärtgerät ist beispielsweise aus der DE 101 04 579 A1 bekannt. Bei dieser Lösung sind auf einem gemeinsamen Kupfersubstrat Vertiefungen eingebracht In die Chips eingelassen sind, die der Lichtemission dienen sollen. Diese Lösung hat den Vorteil, dass auf Grund des massiven Kupfersubstrats alle Chips Im Wesentlichen auf der gleichen Temperatur sind und auch eine gute Wärmeableitung sichergestellt ist. Die Lichtemission Ist Jedoch bei dieser Lösung verbesserungswürdig, was Insbesondere an den recht kleinen Reflektoren liegt.

Um die Lichtemission zu verbessern, ist es vorgeschlagen worden, Über derartigen Einzelreflektoren je Sammellinsen vorzusehen. Dennoch Ist der Lichtwirkungsgrad nicht besonders hoch. Dies gilt auch für die aus den deutschen Patenten DE 101 25 341 B4 und DE 101 27 416 B4 bekannten Lösungen. Hier sind die Reflektoren zumindest teilweise als erhabene Körper aufgebracht, die die LED-Chips eng umgeben.

Ferner ist es bereits vorgeschlagen worden, LED-Lampen mit parabelförmige Reflektoren zu verwenden, wozu beispielhaft auf die DE 10 2004 007 812 A1 zu verweisen Ist.

Ferner ist firmenintern bereits vorgeschlagen worden, vergrößerte Reflektoren einzusetzen, die gemeinsam aus einem massiven Körper aufgebaut sind, wobei die Einzel-Reflektoren miteinander verschnitten sind. Überraschend ist die Lichtabgabe bei einer derartigen Lösung jedoch vergleichsweise wenig befriedigend, so dass diese Lösung nicht weiter verfolgt wurde.

Gerade bei Lichthärtgeräten für Dentalzwecke ist es jedoch entscheidend, dass die Lichtabgabe ausreichend und innerhalb der Spezifikationen Ist. Eine unzureichende Lichtabgabe kann dazu führen, dass das zu polymerisierende Dentalmaterial nicht vollständig durchgehärtet Ist, was nicht nur dazu führt, dass freie Radikale verbleiben, sondern insbesondere auch dazu, dass das Restaurationsergebnis insgesamt nicht ausreichend ist, was regelmäßig zu Reklamationen führt.

Die Druckschrift US 2005/0231983 A1 offenbart ein Lichthärtgerät gemäß dem Oberbegriff des Anspruchs 1.

Die Druckschrift US 2008/0054288 A1 offenbart ein Lichthärtgerät für Dentalzwecke, mit einer Mehrzahl von Halbleiter-Lichtquellen, die je einen lichtemittierenden Chip aufweisen, welche Chips auf einem gemeinsamen Substrat (20) angebracht sind.

Die Druckschrift EP 1710 846 A1 offenbart ein Lichthärtgerät gemäß dem Oberbegriff des Anspruchs 1.

Die Druckschrift US 7 300 175 B2 offenbart ein Lichthärtgerät gemäß dem Oberbegriff des Anspruchs 1.

Demgegenüber liegt der Erfindung die Aufgabe zur Grunde, ein Lichthärtgerät für Dentälzwecke gemäß dem Oberbegriff von Anspruch 1 zu schaffen, das mehrere Chips aufweist, die getrennt oder zusammen ansteuerbar sind, wobei die Lichtabgabe im Vergleich zu den bislang bekannten Mehrfachanordnungen von LED-Chips verbessert ist.

Diese Aufgabe wird erfindungsgemäß durch Anspruch 1 gelöst. Vorteilhafte Weiterbildungen ergeben sich aus den Unteransprüchen.

Erfindungsgemäß ist die Lichtabgabe des erfindungsgemässen Lichthärtgeräts gerade auch bei hoher Leistung verbessert. Erfindungsgemäss kann nämlich eine hochwertige und für alle Chips gemeinsame Optik eingesetzt werden, und deren Lichtabgabe liegt überraschend. nahe am theoretischen Maximum. Ergänzend oder alternativ zu dieser gemeinsamen Optik können vorteilhafte einzelne Linsenelemente, wie sie weiter unten noch beschrieben werden werden, Anwendung finden.

Offenbar wirkt sich die erfindungsgemäß erzielte thermische und mechanische Entkopplung der einzelnen Reflektorkörper so aus, dass diese - unabhängig von ihrer Betriebstemperatur - ihre vorgegeben optischen Achsen nicht verändern. Dies erlaubt es, hochverspiegelte Metall- öder Kunststoffkörper als Reflektorkörper einzusetzen, deren Wärmeausdehnungskoeffizient an sich vergleichsweise gross ist, aber dennoch eine Achsentreue des Reflektors erlaubt. Offenbar verformen sich die innen parabolischen Reflektorkörper dann symmetrisch, ohne dass die LED-Chips den Brennpunkt verlassen, und es entsteht auch kein Achsenfehler wie bei den vorbekannten Lösungen, bei denen die Reflektoren durch die thermische Belastung, also die Ausdehnung, gleichsam nach aussen wandern und sich deshalb in ihrer Winkelstellung zueinander verändern.

Es versteht sich, dass ein Reflektorkörper metallisch ausgebildet sein kann, wobei er dann zugleich auch eine gewisse Kühlfunktion für die abgegebene Wärme hat, oder auch aus Kunststoff mit einer entsprechenden Innenverspiegelüng bestehen kann.

Die Verbindung zwischen dem Reflektorkörper und dem Substrat kann dabei vorzugsweise mittels eines direkten Kontakts, insbesondere mittels Presskontakts, zwischen Reflektorkörper und Substrat hergestellt werden, um eine gute mechanische und thermische Kopplung zwischen diesen beiden Komponenten zu erzielen, wofür beispielsweise Befestigungsschrauben, aber auch eine Vielzahl anderer mechanischer oder chemischer Verbindungsverfahren verwendet werden können.

Daneben ist es aber auch vorstellbar, die Verbindung zwischen dem Reflektorkörper und dem Substrat über ein mechanisch stabiles Wärmeleitelement - also mittelbar - herzustellen, welches gleichzeitig auch der Befestigung des Reflektorkörpers am Substrat dienen kann, aber nicht muss. Ein solches Wärmeleitelement könnte zusätzlich beispielsweise mittels Fluldkühlung und/oder Heatplpes ggf. auch gleichzeitig eine effiziente Kühlung von Reflektorkörpern und/oder Substrat und/oder lichtemittierenden Chips gewährleisten.

In erfindungsgemäßer besonders günstiger Weise ist es dementsprechend vorgesehen, dass die Reflektorkörper untereinander zumindest mechanisch und vorzugsweise auch thermisch entkoppelt sind, und zwar dergestalt, dass auch bel entsprechender Ausdehnung keine Anlage der einzelnen Reflektorkörper aneinander entsteht, und untereinander allenfalls indirekt über das gemeinsame, Substrat verbunden sind.

Dies kann vorzugsweise dadurch geschehen, dass die benachbarten Reflektorkörper jeweils durch einen Spalt voneinander getrennt sind, wobei der Spalt sich In gleicher Breite über die gesamte Trennfuge zwischen den benachbarten Reflektorkörpern erstreckt.

Erfindungsgemäß besonders günstig ist es, wenn die Reflektorkörper mindestens im kalten Zustand durch einen Spalt voneinander getrennt sind. Vorteilhafterweise ist jedoch die Breite des Spaltes so bemessen, dass die erwünschte mechanische und thermische Entkopplung der Reflektorkörper untereinander unter allen auftretenden Betriebsbedingungen gewährleistet Ist.

Dabei weist der Spalt zwischen den Reflektorkörpern vorzugsweise in kaltem Zustand eine Breite auf, die so berechnet Ist, dass der Reflektorkörper sich bel Überführung vom kalten In den heißen Zustand höchstens um die Hälfte der Breite des Spalts in den Spalt hineinerstreckt. Hierdurch kann gewährleistet werden, dass keiner der Reflektorkörper bei thermischer Ausdehnung im Betrieb mit einem der anderen Reflektorkörper in Berührung kommt.

So können vorteilhafterweise die Reflektorkörper untereinander, durch einen Spalt, der vorzugsweise Ober seine gesamte Fläche eine im Wesentlichen gleiche Breite aufweist, zumindest mechanisch und vorzugsweise gleichzeitig auch thermisch entkoppelt sein, so dass keiner der Reflektorkörper bei thermischer Ausdehnung Im Betrieb mit einem der anderen Reflektorkörper in Berührung kommt.

Die Spalte zwischen den Reflektorkörpern verlaufen bevorzugt gerade, zumindest, soweit einander benachbarte Reflektoren betroffen sind, und tangential zum jeweils zugehörigen Die Spalte zwischen den Reflektorkörpern verlaufen bevorzugt gerade, zumindest, soweit einander benachbarte Reflektoren betroffen sind, und tangential zum jeweils zugehörigen Reflektorkegel des Reflektorkörpers. Im Rahmen dieser Anmeldung sei unter Reflektorkegel ein beliebiger geeignet geformter und für die Lichtabgabe und optimierter Körper zu verstehen, auch wenn dieser lediglich im Wesentlichen kegelförmig, also beispielsweise parabolisch, ausgebildet ist.

Durch die zuvor dargestellten konstruktiven Ausformungen wird in wirkungsvoller Weise verhindert, dass sich die optischen Achsen der Reflektorkörper bei thermischer Ausdehnung im Betrieb in ihrer Winkelstellung zueinander verändern und dadurch die Lichtausbeute - insbesondere bei hoher Leistungsanforderung - mit steigender Betriebsdauer erheblich sinkt, wie dies bei Konstruktionen nach dem Stand der Technik unvermeidlich war.

Erfindungsgemäß ist es besonders günstig, wenn wenigstens die in Abstrahlrichtung weisende Oberfläche jedes lichtemittierenden Chips von jeweils einer Linse aus transparentem, lichtbrechendem Material, vorzugsweise Kunststoff, insbesondere Silikon abgedeckt ist. Unter Abstrahlrichtung sei hier die Richtung verstanden, in der das durch Reflektor und ggf. Linsenelemente das Maximum des gebündelten Lichtstrahls abgestrahlt wird und die im Wesentlichen mit der Symmetrieachse des Reflektors zusammenfällt.

Durch diese Ausgestaltung kann die aus den LED-Chips austretende Lichtstrahlung besser, d.h. mit einem höheren Wirkungsgrad und in einem optisch günstigeren Winkel dem Reflektor des Reflektorkegels zugeleitet und dadurch die die Lichtausbeute erhöht werden, und zudem derjenige Anteil der aus der in Abstrahlrichtung weisenden Oberfläche des LED-Chips austretenden Strahlung, welcher innerhalb des Öffnungskegels des Reflektors und damit ohne Reflexion am Reflektor austreten würde, ebenfalls einer Fokussierung zugeführt werden. Zusätzlich wäre es denkbar, beispielsweise die Substratoberfläche in dem Bereich unter der Linse partiell zu verspiegeln, um auch nach unten, also auf das Substrat zu, gerichtete Lichtstrahlen aus dem LED-Chip zu reflektieren und durch das Linsenelement zu bündeln.

Als Materialien für dieses Linsenelement können vorzugsweise optische Kunststoffs, wie Polycarbonat, Polymethylmethacrylat, Cyclo-Olefin-(Co)polymere oder insbesondere Silikon, eingesetzt werden. Dabei kann ein solches Linsenelement entweder vorgefertigt und auf LED-Chip und/oder Substrat beispielsweise durch Verklebung aufgebracht werden, bereits integraler Bestandteil des LED-Chips sein, oder an Ort und Stelle auf den LED-Chip aufgegossen oder -gespritzt werden.

Erfindungsgemäß ist es besonders günstig, wenn die in Abstrahlrichtung weisende Oberfläche der Linse (60) im Wesentlichen kalotten- oder halbkugelförmig ausgebildet ist und vorzugsweise auch die Seitenwände des jeweiligen lichtemittierenden Chips überdeckt.

Zur Herstellung eines solchen Linsenelements können vorzugsweise flüssige oder plastische Kunststoffmassen eines optischen Kunststoffs, wie Polycarbonat, Polymethylmethacrylat, Cyclo-Olefin-(Co)polymere oder insbesondere Silikon, welche in flüssige oder plastischem Zustand auf das Substrat und über dem auf dem Substrat angeordneten LED-Chip aufgebracht werden können, eingesetzt werden. Eine solche Kunststoffmasse umschließt den LED-Chip an seiner in Abstrahlrichtung weisenden Oberfläche, sowie an seinen Seitenflächen und breitet sich bis zu einem auf dem Substrat aufgebrachten Ring, der sich hinsichtlich seiner Oberflächeneigenschaften von denen des Substrats unterscheidet, und der ein weiteres Verfließen der Kunststoffmasse verhindert, so dass die Kunststoffmasse eine Halbkugel oder Kugelkalottenform ausbilden kann.

Vorteilhafterweise kann sich die ausgebrachte Kunststoffmasse zudem stoffschlüssig einerseits mit dem Substrat verbinden, was gleichzeitig eine besonders gute mechanische und thermische Verbindung des LED-Chips mit dem Substrat sicherstellt, und andererseits auch mit der Chipoberfläche, so dass dort - insbesondere bei identischen oder ähnlichen Brechungsindizes der jeweiligen Kunststoffe von LED-Chip und Kunststoffmasse für das Linsenelement - optische Grenzflächenphänomene vermieden oder stark reduziert werden können.

Erfindungsgemäß ist es besonders günstig, wenn der lichtemittierende Chip mit mindestens zwei seiner Ecken an dem Reflektorkörper anliegt und so eine Relativposition zwischen dem Chip und dem Reflektorkörper festlegt. Durch diese Ausgestaltung kann eine Zwangspositionierung des Reflektorkörpers erzielt und damit die Montage vereinfacht werden.

Erfindungsgemäß ist es besonders günstig, wenn sich die Linse bis zu einem auf dem Substrat aufgebrachten Ring, welcher vorzugsweise mit dem Substrat vorzugsweise stoffschlüssig verbunden ist, oder bis zu einer Innenkontur des Reflektorkörpers erstreckt. Hierbei sei unter der Innenkontur der Umfang bzw. Rand der Öffnung am unteren bzw. substratseitigen Ende des Reflektorkörpers verstanden, die es vorzugsweise ermöglicht, den Reflektorkörper über einen mit dem Substrat verbundenen LED-Chip zu setzen und mit Substrat in Kontakt zu bringen.

Ein solcher Ring kann insbesondere durch eine spezifische Oberflächenlackierung des Substrats, ähnlich einer Lötstoppmaske, hergestellt werden oder durch einen Kunststoff- oder Metallring, der auf die Substratoberfläche beispielsweise aufgeklebt werden kann, oder durch eine chemische oder physikalische Oberflächenbehandlung der Substratoberfläche, in Ringform. Durch die entsprechende geometrische Form und/oder Oberflächeneigenschaften kann eine Begrenzung der Ausbreitung der Kunststoffmasse und die Ausbildung einer Halbkugel- oder Kugelkalottenform erreicht werden. Je nach Ausführung der Oberfläche dieses Rings ist es dabei möglich, die Ausbreitung der Kunststoffmasse bereits am Innenumfang des Ringes, oder erst am Außenumfang des Ringes zu stoppen. Zudem kann die Beschaffenheit des Ringes so gewählt werden, dass die sich ausbreitende Kunststoffmasse nur einen Teil der Ringbreite überdeckt.

Durch einen solchen Ring kann die Ausbreitung der flüssigen oder plastischen Kunststoffmasse präzise gestoppt und ein Verfließen derselben verhindert werden. Gleichzeitig bildet die Kunststoffmasse eine konvexe Struktur über Substrat und LED-Chip aus, deren Oberfläche im Wesentlichen Halbkugel- oder kalottenförmig ist. Hierdurch ist in vorteilhafter Weise eine kostengünstige Herstellung präziser optischer Linsenstrukturen möglich.

Erfindungsgemäß ist es besonders günstig, wenn der Ring vom lichtemittierenden Chip und insbesondere von der Innenkontur des Reflektorkörpers in radialer Richtung beabstandet ist. Durch eine solche Ausführungsform kann die Herstellung präziserer Linsenelemente (durch den größeren Abstand zu geometrischen und physikalisch-chemischen Strukturgrenzen beispielsweise im Bereich von LED-Chip und Substrat können Beeinflussungen und Irregularitäten an der Linsenoberfläche minimiert werden) begünstigt werden.

Erfindungsgemäß ist es besonders günstig, wenn die Linse die in Abstrahlrichtung weisende Oberfläche des Ringes wenigstens teilweise abdeckt. Eine solche Ausführungsform kann unter geometrischen und konstruktiven Gesichtspunkten vorteilhaft sein und eine Verbesserung der Linsenoberfläche ermöglichen.

Erfindungsgemäß ist es besonders günstig, wenn der Ring als integraler Bestandteil des Reflektorkörpers oder als supplementärer Bestandteil eines zumindest zweiteiligen Reflektorkörpers ausgebildet ist, wobei die zumindest aus Ring und Reflektoraufsatz bestehenden Teile des Reflektorkörpers mechanisch und/oder stoffschlüssig miteinander verbunden sind. Vorteilhafterweise kann in dieser Ausführungsform die Vorab-Herstellung des Ringes eingespart werden und bereits bestehende Strukturen des Reflektorkörpers nutzen, wodurch Herstellungskosten eingespart werden können.

Erfindungsgemäß ist es besonders günstig, wenn der Ring als Führungselement für den lichtemittierenden Chip und/oder als Führungselement für den Reflektorkörper ausgebildet ist. Hierdurch kann durch den Ring gleichzeitig eine Führungsfunktion bereitgestellt werden, durch welche sich eine präzisere Positionierung der Bauteile und eine Verbesserung der optischen Ausrichtung erzielt werden kann und gleichzeitig die Montage vereinfacht und verbilligt werden kann.

Dabei könnte der LED-Chip beispielsweise von der Substratoberfläche abgehoben sein und auf einem Lötsockel, einem Wärmeleitsockel oder einer anderen Art von Verbindungssockel sitzen, wodurch die geometrische und optische Anordnung des LED-Chips innerhalb des Reflektorkegels und die mechanische Verankerung des LED-Chips auf dem Substrat verbessert und die Wärmeableitung erhöht werden könnte. Um dieses Sockelelement herum, und zumindest teilweise mit diesem in Anlage befindlich, könnte dann der Ring als Führungselement angeordnet sein, der durch das Sockelelement zwangspositioniert und zentriert werden kann. In gleicher Weise kann aber beispielsweise auch ein unmittelbar mit dem Substrat verbundener LED-Chip Verwendung finden, durch den ebenfalls eine exakte Positionierung des Führungselementes erzielt werden kann.

Zugleich kann der Ring als Führungselemente auch zur exakten Zwangspositionierung des Reflektorkörpers vorgesehen sein. Der Ring kann hierfür in die substratseitige Öffnung des Reflektorkörpers eingreifen, der eigens dafür ausgebildete Strukturen, wie beispielsweise eine mit der Außenkontur des Ringes korrespondierende Nut in der Auflagefläche des Rings auf dem Substrat aufweisen. Hierdurch kann mittels des Ringes gleichzeitig eine Führungsfunktion bereitgestellt werden, durch welche sich eine präzisere Positionierung der Bauteile und eine Verbesserung der optischen Ausrichtung erzielt werden kann und gleichzeitig die Montage vereinfacht und verbilligt werden kann.

Zur Verbesserung der Wärmeableitung gerade auch bei Wechselbetrieb der LED-Chips, die auch unterschiedliche Wellenlängen emittieren können, ist es möglich, die Reflektorkörper, gerade wenn sie metallisch ausgebildet sind, über das Substrat miteinander mechanisch und insbesondere aber auch thermisch zu verbinden. Durch Herstellung einer guten Wärmeleitverbindung zwischen dem Reflektorkörper und dem Substrat mittels der bereits zuvor genannten Mittel, sowie Gewährleitung einer hohen Wärmeableitfähigkeit des Substrats verringert sich auch der Temperaturanstieg und die thermische Ausdehnung der Reflektorkörper, was ebenfalls der Stabilisierung der geometrisch-optischen Verhältnisse zugute kommt.

Als zusätzliche Kühlungsmaßnahmen zu Verbesserung der Wärmeableitfähigkeit des Substrats kommen dabei insbesondere die oben bereits genannten Mittel, sowie die in Verbindung mit dem Ausführungsbeispiel diskutierten Maßnahmen.

In diesem Zusammenhang kann es weiter vorteilhaft sein, wenn jeder Reflektorkörper insbesondere metallisch ausgebildet ist und insbesondere eine im Wesentlichen gleichförmige Wandstärke hat, was eine besonders einfache und kostengünstige Fertigung der Reflektorkörper ermöglicht. Dies stellt eine kostengünstig herstellbare technische Ausgestaltung dar, die u.a. Wärmeleitfähigkeit, Temperaturbeständigkeit und Ausdehnungskoeffizienten von Metallen (insbesondere Aluminium und Kupfer) vorteilhaft nutzen kann.

Außerdem ist eine großflächige Auflage des Reflektorkörpers bevorzugt, der bevorzugt eine erhebliche Wandstärke von beispielsweise 1/4 des Durchmessers der Lichtaustrittsfläche jedes Reflektorkörpers betragen kann. Es versteht sich, dass die Wandstärke der Einzel-Reflektorkörper je in weiten Bereichen an die Erfordernisse anpassbar ist. Beispielsweise kann auch eine Wandstärke von 1/3 oder 1/5 oder 1/6 der Lichtemissionsfläche des Einzel-Reflektorkörpers gewählt werden.

In einer weiteren erfindungsgemäßen Ausgestaltung ist es vorgesehen, dass die Reflektorkörper in einem unteren und damit substratnäheren Bereich eine größere Wandstärke als in einem oberen, und damit der oberen Abschlussfläche näheren Bereich aufweisen. Durch diese Bauweise kann - bei vorteilhafter gleichzeitiger Verringerung der Baugröße der gesamten Lichtquelle für das Lichthärtgerät und einer Annäherung der optischen Achsen der Reflektorkörper aneinander - die Wärmeableitung über das Substrat weiter optimiert werden.

Vorteilhafterweise können die Einzel-Reflektorkörper an ihrem freiliegenden Außenümfang bei Bedarf auch mit Wärmableitmitteln versehen sein, beispielsweise mit Kühlrippen oder durch Kontakt mit einem großflächigen Wärmeableitkörper, um hierdurch zusätzlich den Temperaturanstieg der Reflektorkörper und die damit verbundene Beeinträchtigung der optischen Eigenschaften zu verringern.

Erfindungsgemäß besonders günstig ist es, wenn jeder Reflektorkörper einen Reflektorkegel aufweist, der im Wesentlichen insbesondere innen stumpf-parabolisch ausgebildet ist und dass die lichtaustrittsseitigen Öffnungen der Reflektorkörper in einer Ebene liegen und insbesondere die LED-Chips je im Brennpunkt der Parabeln angeordnet sind. Bei dieser Ausführungsform ist eine einfache und günstige optische Anordnung gegeben, die sich einfach mit einer später dargestellten Linsenanordnung kombinieren lässt. Erfindungsgemäß besonders günstig ist es, wenn die lichtemittierenden Chips mit dem Substrat thermisch gekoppelt sind und diese thermische Kopplung vorzugsweise stärker ist, als die thermische Kopplung der lichtemittierenden Chips mit dem Reflektorkörper.

Erfindungsgemäß ist es - auch unter Gesichtspunkten der soeben erwähnten thermischen Kopplung, aber auch in mechanischer und fertigungstechnischer Hinsicht - besonders günstig, wenn die Reflektorkörper auch am substratseitigen Ende eine Öffnung aufweisen, die zur Einführung eines mit dem Substrat verbunden lichtemittierenden Chips geeignet ist, wobei die Dicke, bzw. Wandstärke des Reflektorkörpers am Rande dieser Öffnung gegen Null ausläuft oder zumindest gegenüber der Wandstärke der Reflektorkörper in anderen Bereichen auf weniger als 1/4, insbesondere auf weniger als 1/10 reduziert ist. Bei dieser Ausgestaltung ist möglich, eine optimale thermische Kopplung zwischen Reflektorkörper und Substrat (durch kurze Wärmeleitstrecken und vergrößerte Kontaktfläche zwischen dem Reflektorkörper und dem Substrat) bei gleichzeitig minimaler Bauhöhe und großer mechanischer Stabilität zu erzielen.

Zudem kann bei dieser Ausführungsform gleichzeitig der Wärmeübergangswiderstand zwischen Reflektorkörper und Substrat einerseits und lichtemittierendem Chip und Substrat andererseits minimiert werden, während der Wärmeleitwiderstand zwischen Reflektorkörper und lichtemittierendem Chip vergrößert werden kann, wobei die optimale Kühlung der wärmebelasteten Bauteile erreicht wird, bei gleichzeitiger Minimierung der Wärmeübertragung vom lichtemittierenden Chip auf den Reflektorkörper. Durch die entsprechende Ausformung der Öffnung an der Basis des Reflektorkörpers, dessen Dicke, bzw. Wandstärke am Rande dieser Öffnung gegen Null ausläuft, lässt sich überdies eine optimale Ausnutzung der Lichtleistung des lichtemittierenden Chips selbst dann noch erzielen, wenn dieser größere Teile seines Lichtstroms seitlich und nicht in Richtung der optischen Achse emittiert.

Weitere Vorteile dieser Ausführungsform liegen zudem noch in der effizienteren Montage und der größeren Reparaturfreundlichkeit, da bereits mit dem Substrat verbundene lichtemittierende Chips durch die Öffnung im Basisbereich des Reflektors - also im Bereich der Auflage des Reflektorkörpers auf dem Substrat - einfach hindurchgeschoben und in den Reflektor eingeschoben werden können, wobei die Montage ebenfalls in anderer Reihenfolge vorgenommen werden kann.

Erfindungsgemäß besonders günstig ist es, wenn die Reflektorkörper (22, 24 und 26) in Wärmeleitverbindung mit dem Substrat (20) stehen, wobei die einzelnen Reflektorkörper (22, 24 und 26) vorzugsweise durch eine spaltfreie und enge Auflage auf dem Substrat (20) mit dem Substrat, sowie über das Substrat (20) auch untereinander thermisch verbunden sind. Hierdurch lässt sich eine besonders günstige Wärmeableitung und Wärmeverteilung erzielen.

Erfindungsgemäß besonders günstig ist es, wenn jeder Reflektorkörper mit dem Substrat formschlüssig verbunden ist und insbesondere an einem der Lichtaustrittsrichtung gegenüberliegenden Endbereich mindestens einen Vorsprung aufweist, der in eine Vertiefung oder Durchbrechung des Substrats eingreift. Dies stellt eine konstruktiv vorteilhafte und kostengünstige Ausgestaltung dar.

Erfindungsgemäß besonders günstig ist es, wenn an den Einzelreflektoren je mindestens ein Vorsprung ausgebildet ist, der von der Außenfläche des Reflektors ausgehend nach außen weist und insbesondere die Reflektorkörper abragende, die Kühloberfläche des Reflektorkörpers vergrößernde Vorsprünge bzw. Rippen vorgesehen sind. Hierdurch lässt sich auf kostengünstige und einfache Weise die Kühlung der Reflektorkörper verbessern.

Erfindungsgemäß besonders günstig ist es, wenn die Einzelreflektoren durch eine spaltfreie und enge Auflage auf dem Substrat über das Substrat thermisch miteinander verbunden sind. Hierdurch lässt sich u.a. die Wärmeübertragung von den Reflektorkörpern auf das Substrat erheblich verbessern. Zu diesem Zweck kann auch der Einsatz von Wärmeleitpaste oder entsprechenden Klebern sinnvoll sein.

Erfindungsgemäß besonders günstig ist es, wenn eine den Reflektorkörper abdeckende Sammellinse oder transparente Abdeckscheibe am lichtaustrittseitigen Öffnungsbereich von wenigstens einem Reflektorkörper oder vorzugsweise am lichtaustrittseitigen Öffnungsbereich von mehren Reflektorkörpern angeordnet ist. Dabei umfasst der Begriff "Abdeckscheibe" nicht nur mechanische Abdeckscheiben, sondern ebenso optische Filter, wie Sperrfilter für Infrarot- und/oder UV-Strahlung und/oder für andere Wellenlängenbereiche, die von lichtemittierenden Chips abgegeben werden. Der Einsatz einer gemeinsamen optischen Struktur für eine Mehrzahl oder sämtliche Reflektoren kann dabei insbesondere unter Kostengesichtspunkten interessant sein und ermöglich darüber hinaus die Entwicklung besonders hochwertiger, einfach und präzise zu verbauender Optiken, durch die eine bessere Formung der aus den Reflektoren austretenden Lichtbündel erzielt werden kann.

Erfindungsgemäß besonders günstig ist es, wenn die Halbleiter-Lichtquellen an dem vorderen Ende eines handgeführten Lichthärtgeräts angeordnet sind. Diese Ausführungsform ist besonders günstig dank der besonders kompakten Bauweise der "Lichtquelle" des Dentalgerätes realisierbar und eröffnet dadurch die Möglichkeit, der Anordnung der Halbleiter-Lichtquellen an dem vorderen Ende eines handgeführten Lichthärtgeräts. Hierdurch kann u.a. der relativ schwere, starre und insbesondere beispielsweise im UV-Bereich stark absorbierende Lichtleiter entfallen und so beispielsweise eine besonders leichte, kompakte und hochflexible Mundsonde geschaffen werden, mit der auch schwer zu erreichende Positionen in einem Patientenmund besser zu erreichen sind.

Erfindungsgemäß besonders günstig ist es, wenn in Lichtaustrittsrichtung nach den Halbleiter-Lichtquellen ein Lichtleitelement insbesondere in Form eines Lichtleitstabes angeordnet ist. Diese Ausführungsform ist insbesondere dann zu bevorzugen, wenn eine besonders leistungsfähige Lichtquelle für das Lichthärtgerät benötigt wird, die vorteilhafterweise dann im Hangriff des Lichthärtgerätes untergebracht und dort auch einfacher gekühlt werden kann, wobei gleichzeitig die Mundsonde schlanker gehalten werden kann.

Erfindungsgemäß besonders günstig ist es, wenn die Halbleiter-Lichtquellen Licht mit einer Wellenlänge von 350 bis 480 nm emittieren, und dass insbesondere mindestens zwei aneinander benachbarte Lichtquellen Licht unterschiedlicher Wellenlänge emittieren. Dies stellt einen besonders günstigen Wellenlängenbereich beispielsweise für die Polymerisation von Dentalkunststoffen, -formmassen, und Klebe- oder Siegelmitteln dar.

Erfindungsgemäß besonders günstig ist es, wenn jeder der Reflektorkörper über mindestens die Hälfte seines Umfangs eine gleichförmige Wandstärke aufweist, die insbesondere mindestens 1/8, bevorzugt etwa 1/4 des Lichtaustrittsdurchmessers des Reflektorskörpers beträgt.

Erfindungsgemäß besonders günstig ist es, wenn mindestens zwei und höchstens fünf, insbesondere höchstens vier, Reflektorkörper aneinander benachbart auf einem gemeinsamen Substrat angeordnet sind, insbesondere drei Reflektorkörper.

Erfindungsgemäß besonders günstig ist es, wenn Lichthärtgerät nach einem der vorhergehenden Ansprüche, dadurch gekennzeichnet, dass die Außenumkreisflächen im Bereich der oberen Abschlussflächen zumindest jeweils zweier Reflektorkörper einander schneiden.

Erfindungsgemäß besonders günstig ist es, wenn einander benachbarte Reflektorinnenflächen nicht miteinander verschnitten sind und wenn die Wandstärke der Reflektorkörper zumindest auf der Verbindungslinie zwischen zwei benachbarten Reflektorkörpern im Bereich ihrer oberen Abschlussflächen gegenüber der Wandstärke der Reflektorkörper in anderen Bereichen auf mindestens die Hälfte, insbesondere auf weniger als 1/10 reduziert ist. Durch die vorgenannten konstruktiven Maßnahmen lässt sich eine besonders kompakte Bauweise der Lichtquelle für das Lichthärtgerät erzielen, die zudem auch den Einsatz von lichtemittierenden Chips mit unterschiedlichen Emissionsspektren und/oder die Erzielung eines besonders hohen Arbeitslichtstroms durch Parallelschaltung geometrisch-optisch optimal angeordneter lichtemittierender Chips ermöglicht.

Die einzelnen Merkmale der in den Unteransprüchen niedergelegten Unteransprüche, sowie der nachstehend exemplarisch ausgeführten Ausführungsbeispiele können, soweit sie sich nicht technisch einander behindern oder ausschließen, beliebig mit allen anderen, der erläuterten Einzelmerkmale aus Unteransprüchen und/oder nachstehend beschriebenen Ausführungsbeispiele kombiniert werden.

Weitere Vorteile, Einzelheiten und Merkmale ergeben sich aus der nachfolgenden Beschreibung mehrerer Ausführungsformen der Erfindung anhand der Zeichnung.

Es zeigen:

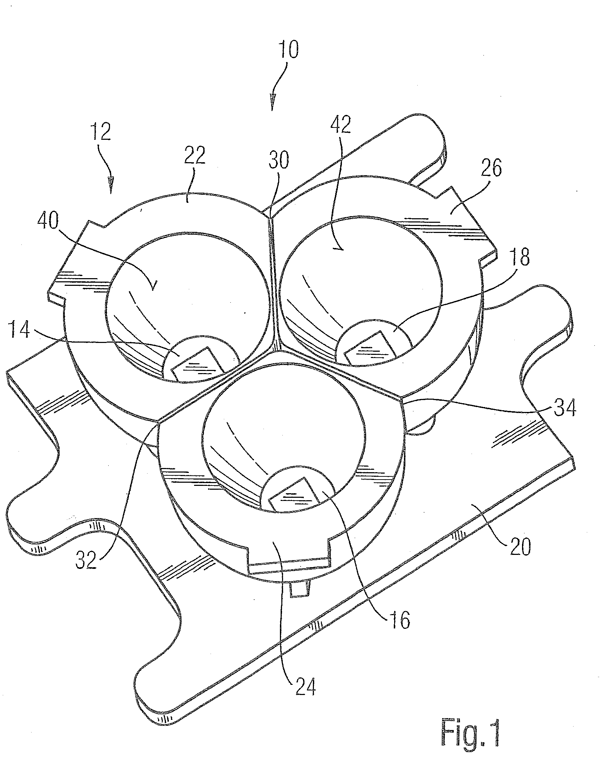

- Fig. 1: eine schematische perspektivische Ansicht der Lichtquelle einer Ausführungsform eines erfindungsgemäßen Lichthärtgeräts für Dentalzwecke;
- Fig. 2: eine weitere perspektivische Ansicht der Ausführungsform gemäß Fig. 1;
- Fig. 3: eine Ansicht der Ausführungsform gemäß Fig. 1, jedoch schräg von unten;
- Fig. 4: eine Schnittdarstellung durch einen Reflektorkörper gemäß der Ausführungsform nach Fig. 1, jedoch mit auf dem LED-Chip aufgesetztem Linsenelement;
- Fig. 5: eine weitere Schnittdarstellung einer zweiten Ausführungsform eines Reflektorkörpers mit einem auf dem LED-Chip aufgesetztem Linsenelement; und
- Fig. 6: eine weitere Schnittdarstellung einer zweiten Ausführungsform eines Reflektorkörpers mit einem auf dem LED-Chip aufgesetztem Linsenelement;

Ein erfindungsgemäßes Lichthärtgerät 10 weist eine Lichtquelle 12 auf, die in dem dargestellten Ausführungsbeispiel eine Mehrzahl von Halbleiter-Lichtquellen umfasst. Hierzu gehören die drei lichtemittierenden Chips 14, 16 und 18, die auf einem gemeinsamen und die chipskühlenden Substrat 20 angebracht sind.

Jeder Chip 14, 16 und 18 ist von einem Reflektorkörper umgeben, der Chip 14 von dem Reflektorkörper 22, der Chip 16 von dem Reflektorkörper 24 und der Chip 18 von dem Reflektorkörper 26. Die einzelnen Reflektorkörper 22 bis 26 sind je von dem Substrat 20 getragen und dort auch befestigt.

Mindestens oberhalb der Chips 14, 16 und 18 ist zwischen den einzelnen Reflektorkörpern 22 bis 26 je ein Spalt vorgesehen, und zwar der Spalt 30 zwischen den Reflektorkörpern 22 und 26, der Spalt 32 zwischen den Reflektorkörpern 22 und 24 und der Spalt 34 zwischen den Reflektorkörpern 24 und 26. Dieser Spalt weist eine erfindungsgemäße Breite auf, die so gewählt ist, dass auch bei Ausdehnung der Einzel-Reflektorkörpern 22 bis 26 die betreffenden Spalte 30 bis 34 nicht überbrückt werden, so dass die Reflektorkörper 22 bis 26 stets mechanisch getrennt sind, ohne in einer Anlage ineinander zu geraten.

Es versteht sich, dass hierzu die Befestigung der Einzel-Reflektorkörper 22 bis 26 auf dem Substrat 20 ausreichend formstabil und fest gewählt ist, dass auch nicht durch Erschütterungen oder dergleichen einer Anlage entsteht, die die Spalte überbrücken würde.

Wenn ein LED-Chips 14, 16 und 18 beispielsweise eine Kantenlänge von 5 mm aufweist, kann jeder Spalt 30 bis 34 im kalten Zustand eine Größe von beispielsweise 0,5 mm aufweisen, wobei es sich versteht, dass die erforderliche Spaltbreite entweder durch Berechnung oder durch Versuche ermittelt werden kann.

Erfindungsgemäß ist es vorgesehen, die Reflektorkörper 22 bis 26 recht dick zu machen. Beispielsweise kann die Wandstärke der Reflektorkörper je etwa 4 mm betragen, wobei auch hier eine Anpassung an die Erfordernisse in weiten Bereichen möglich ist.

Erfindungsgemäß ist die Wandstärke der Reflektorkörper zur Bereitstellung der Spalte 30 bis 34 in den benachbarten Bereichen der Reflektorkörper 22 bis 26 zueinander je deutlich reduziert, gerade im oberen Bereich, also im Bereich der Lichtaustrittsfläche 40 der einzelnen Reflektorkörper 22 bis 26. Dort kann die Wandstärke beispielsweise auf Spaltbreite oder sogar auf die halbe Spaltbreite reduziert sein, wobei es erfindungsgemäß bevorzugt ist, dass die einzelnen Reflektorinnenflächen nicht miteinander verschnitten sind.

Dementsprechend weist jeder Reflektorkörper 22 bis 26 bevorzugt eine parabelstumpfförmige Innenfläche 42 mit einer zweiten Öffnung auch an der Basis, also am substratseitigen Ende des Reflektorkörpers 22, 24 und 26 auf, wobei im dargestellten Ausführungsbeispiel die Dicke des Reflektorkörpers am Rande dieser Öffnung gegen Null ausläuft und die LED-Chips 14, 16 und 18 je im Brennpunkt der Parabelinnenfläche 42 angeordnet sind. Durch diese Ausformung der Öffnung an der Basis des Reflektorkörpers 22, 24 und 26, lässt sich überdies eine optimale Ausnutzung der Lichtleistung des LED-Chips 14, 16 und 18 jeglicher Art erzielen, auch wenn große Teile des Lichtstroms seitlich emittiert werden.

Montage, wie auch Reparatur lassen sich so auch bei einem bereits mit dem Substrat 20 verbundenen LED-Chip 14, 16 und 18 durch die Öffnung im Basisbereich des Reflektorkörpers 22, 24 und 26 vornehmen, wobei der LED-Chip 14, 16 und 18 bereits vor Montage des Reflektorkörpers 22, 24 und 26 in optimale Wärmeleitverbindung mit dem Substrat 20 gebracht und diese kontrolliert werden kann.

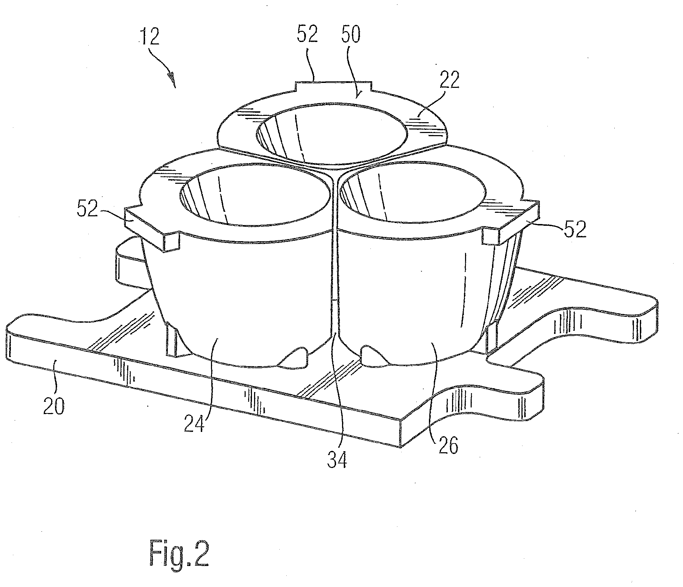

Aus Fig. 2 ist ersichtlich, dass der Spalt 34 zwischen den benachbarten Reflektorkörpern 24 und 26 bis zum Substrat 20, also bis vollständig nach unten hin durchgezogen ist. Der dritte Spalt ist sowohl über die Breite als auch die Höhe betrachtet je gleichförmig, so dass jeder LED-Chip 14, 16 und 18 unabhängig von der Bewegung der Reflektorkörper 22, 24 und 26 je an der vorgegebenen Stelle verbleibt.

Auch wenn das Substrat 20 hier vergleichsweise dünn und wenig massiv dargestellt ist, versteht es sich, dass in der Praxis eine erhebliche thermische Belastung auch dort vorliegen kann. Dementsprechend ist der Wärmedurchgangswiderstand des Substrats 20 senkrecht zu dessen Oberfläche möglichst gering; vorzugsweise kann der Substratkörper im Wesentlichen aus einem gut wärmeleitfähigen Metall, wie Kupfer oder Aluminium, bestehen. Um eine möglichst leistungsfähige und effiziente Kühlung zu gewährleisten, ist es zweckmäßig, den Wärmetransport vom Substrat 20 weg zu verbessern. Dies kann beispielsweise durch an das Substrat 20 angeformte Kühlrippen oder durch thermisch gut mit dem Substrat 20 gekoppelte Kühlkörper mit passiver oder aktiver Kühlung beispielsweise mittels Fluiden (insbesondere Flüssigkeiten, wie Wasser oder andere Kühlflüssigkeiten oder auch gasförmige Luft) oder insbesondere auch mittels "Heatpipes". Es kann aber auch unter konstruktiven und Kostengesichtspunkten zweckmäßig sein, eine gemeinsame Gebläsezwangskühlung von Reflektorkörpern 22, 24 und 26, die vorzugsweise die bereits erwähnten Kühlrippen aufweisen, und Substrat 20, das ebenfalls beispielsweise mit Kühlrippen oder -fingern ausgestattet sein kann, vorzusehen.

Dies ist besonders erfindungsgemäß dann wichtig, wenn auf Grund einer besonderen Optik, die vor den Reflektorkörpern 22 bis 26 angebracht ist, auch die axiale Position der LED-Chips 14, 16 und 18 nicht verändert werden sollte, also nicht nur eine "Verbiegung" bzw. Neigung der einzelnen Reflektorkörper 22, 24 und 26 verhindert werden muss.

Bevorzugt sind die Lichtaustrittsflächen 40 oder lichtaustrittseitlichen Öffnungen der Reflektorkörper 22, 24 und 26 in einer Ebene, wie es besonders aus Fig. 2 gut ersichtlich ist. Diese Ebene kann eine Auflagefläche 50 entweder für Einzel-Sammellinsen oder für eine gemeinsame Sammellinse für die Lichtquelle 12 bilden oder aber für eine ausgefeilte Optik, die die Lichtemissionen bündelt und so fokussiert, wie es für den vorgegebenen Anwendungszweck, nämlich die Lichthärtung von Dentalmaterialien, besonders günstig ist.

Es versteht sich, dass anstelle der Sammellinse oder zusätzlich zu dieser eine transparente Abdeckscheibe und/oder - je nach Anwendung und Einsatzgebiet des Lichthärtgerätes - auch ein Sperrfilter für Infrarot- und/oder UV-Strahlung und/oder für andere Wellenlängenbereiche vorgesehen sein kann, das beispielsweise im Falle eines IR-Sperrfilters auch der thermischen Trennung zwischen der Sammellinse und Reflektoren dient und insofern die Verformung der Optik durch Erwärmung der Reflektorkörper 22, 24 und 26 verhindert.

Erfindungsgemäß kann die Lichtquelle 12 sowohl am vorderen Ende eines handgeführten Lichthärtgeräts als auch in dessen Basis angeordnet sein, wobei im zweiten Fall bevorzugt sich ein Lichtleitstab vor der Lichtquelle 12 erstreckt.

Für die mechanische Befestigung der Lichtquelle 12 können bevorzugt Vorsprünge 52, 54 und 56 vorgesehen sein, die außen/vorne an jedem Einzel-Reflektor 22 bis 26 ausgebildet sein können und nach außen weisen und insbesondere die vorstehend genannt Ebene nicht übersteigen. An dieser Stelle ist der Reflektorkörper 22, 24 und 26 je vergleichsweise kühl, nachdem die Wärme schwerpunktmäßig an der Basis des Reflektorkörpers 22, 24 und 26 eingeleitet wird. Die Aufnahme dort ist insofern auch ohne konstruktiv anspruchsvolle thermische Dämmungsmaßnahmen möglich.

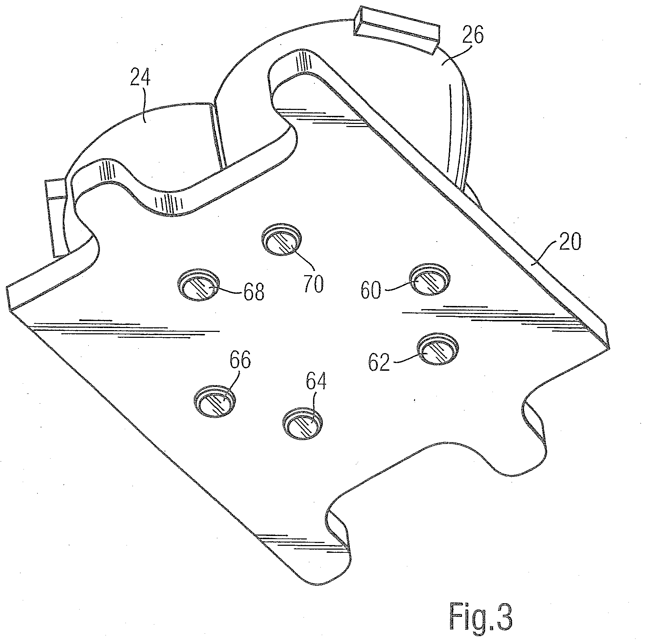

Aus Fig. 3 ist ersichtlich, dass die Reflektorkörper 22, 24 und 26 je nach unten weisende Vorsprünge 60, 62, 64, 66, 68 und 70 aufweisen, also jeder Reflektorkörper 22, 24, und 26 je zwei, die das Substrat 20 durchbrechen und für eine formschlüssige Verankerung sorgen. In diesem Zusammenhang ist es besonders günstig, wenn die Verbindungslinie zwischen zwei Vorsprüngen eines Reflektorkörpers 22, 24 und 26, also beispielsweise der Vorsprünge 60 und 70 des Reflektorkörpers 26, sich unterhalb des betreffenden LED-Chips 14, 16 und 18 des Reflektors befindet, so dass insofern eine symmetrische Führung bei einer etwaigen Wärmeausdehnung des Substrats 20 gewährleistet ist.

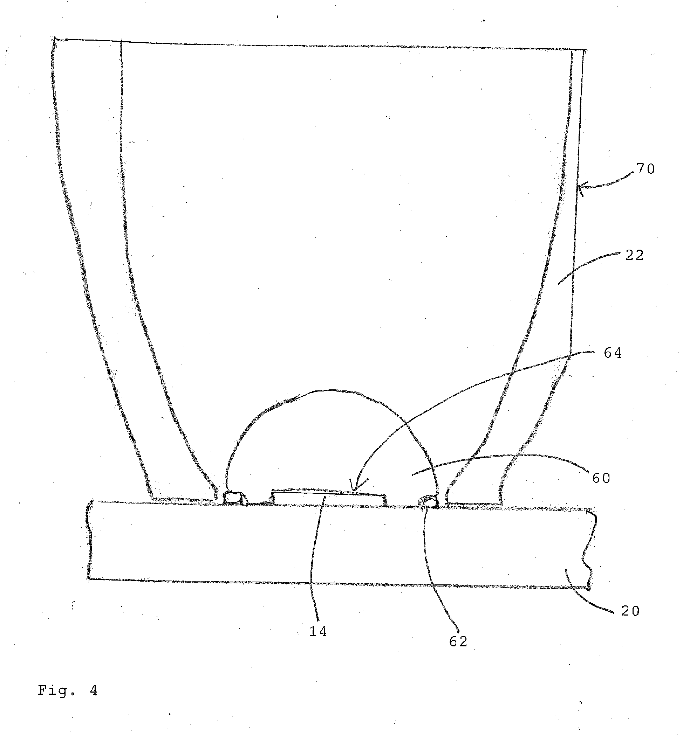

Fig. 4 zeigt eine Schnittdarstellung durch einen Reflektorkörper 22 gemäß dem vorstehend beschriebenen Ausführungsbeispiel, der zusätzlich ein Linsenelement 60 aufweist, das unmittelbar oberhalb des LED-Chips 14 angeordnet ist. Hierdurch kann einerseits des LED-Chips 14austretende Lichtstrahlung besser, d.h. mit einem höheren Wirkungsgrad dem Reflektor des Reflektorkegels 22 zugeleitet und dadurch die Lichtausbeute erhöht werden, und andererseits derjenige Anteil der aus der in Abstrahlrichtung weisenden Oberfläche 64 des LED-Chips 14 austretenden Strahlung, welcher innerhalb des Öffnungskegels des Reflektors und damit ohne Reflexion am Reflektor austreten würde, ebenfalls einer Fokussierung zugeführt werden.

Bei dem in Fig. 4 dargestellten Linsenelement 60 wird vorzugsweise eine flüssige oder plastische Kunststoffmasse eines optischen Kunststoffs, wie Polycarbonat, Polymethylmethacrylat, Cyclo-Olefin-(Co)polymere oder insbesondere Silikon in zähflüssigem oder plastischem Zustand auf das Substrat und über dem auf dem Substrat angeordneten LED-Chip 14 aufgebracht. Diese Kunststoffmasse umschließt den LED-Chip an seiner in Abstrahlrichtung weisenden Oberfläche 64, sowie an den Seitenflächen und breitet sich bis zu einem auf dem Substrat aufgebrachten Ring 62 aus, der sich hinsichtlich seiner Oberflächeneigenschaften von denen des Substrats 20 unterscheidet, und der ein weiteres Verfließen der Kunststoffmasse stoppt, so dass die Kunststoffmasse eine Halbkugel oder Kugelkalottenform ausbilden kann.

Der Ring 62 in diesem Ausführungsbeispiel ist allseitig sowohl von den Außenkonturen des LED-Chips 14 beabstandet, als auch von der Innenkontur der Öffnung des Reflektorkegels 22. Der Ring 62 wird hier durch eine spezifische Oberflächenlackierung des Substrats, ähnlich einer Lötstoppmaske, hergestellt. Alternativ kann ein Kunststoff- oder Metallring auf die Substratoberfläche beispielsweise aufgeklebt werden, durch dessen Form un/oder Oberflächeneigenschaften die Ausbreitung der Kunststoffmasse begrenzt werden. Ebenfalls möglich ist eine beispielsweise chemische oder physikalische Oberflächenbehandlung der Substratoberfläche, entweder in Ringform, oder in Kreisflächenform (hierbei hätte die Kreisfläche im Wesentlichen die Größe des Durchmessers der auszubildenden Kunststofflinse), die gleichermaßen die Ausbreitung der ausgebrachten Kunststoffmasse begrenzen kann.

Je nach Ausführung der Oberfläche dieses Rings 62 ist es dabei möglich, die Ausbreitung der Kunststoffmasse bereits am Innenumfang des Ringes 62, oder erst am Außenumfang des Ringes 62 zu stoppen. Zudem kann die Beschaffenheit des Ringes 62 so gewählt werden, dass die sich ausbreitende Kunststoffmasse nur einen Teil der Ringbreite überdeckt.

Die ausgebrachte Kunststoffmasse verbindet sich einerseits mit dem Substrat 20, was gleichzeitig eine besonders gute mechanische und thermische Verbindung des LED-Chips 14 mit dem Substrat 20 sicherstellt, und andererseits mit der Chipoberfläche, so dass dort - insbesondere bei identischen oder ähnlichen Brechungsindizes der jeweiligen Kunststoff von LED-Chip 14 und Kunststoffmasse - optische Grenzflächenphänomene vermieden oder stark reduziert werden können.

Im Übrigen lässt sich aus dieser Fig. 4 auch gut die einseitige Abflachung 70 der Außenwand des Reflektorkegels 22 erkennen, die sich zwischen zwei aneinandergrenzenden Reflektorkegeln 22 befinden würde, und die den die thermische Ausdehnung der Reflektorkegel 22 ermöglichende Spalt mit der gegenüberliegenden abgeflachten Reflektorwand 70 des angrenzenden Reflektorkegels 22 zusammen ausbildet.

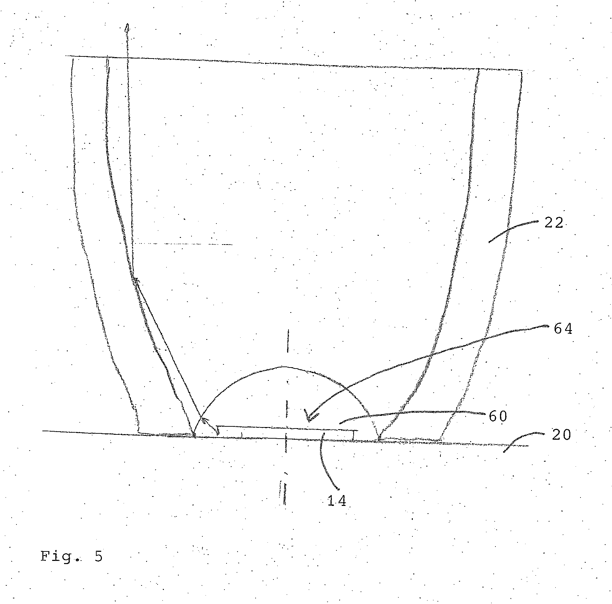

Fig. 5 zeigt ein alternatives Ausführungsbeispiel eines Reflektorkörpers 22 mit einem auf dem LED-Chip 14 aufgesetztem Linsenelement 60. Diese Ausführungsform kommt ohne einen auf dem Substrat 20 aufgebrachten Ring 62 aus, und verwendet stattdessen die Innenkontur der unterseitigen Öffnung im Reflektorkegel 22 zur Begrenzung der Ausbreitung der flüssigen oder plastischen Kunststoffmasse.

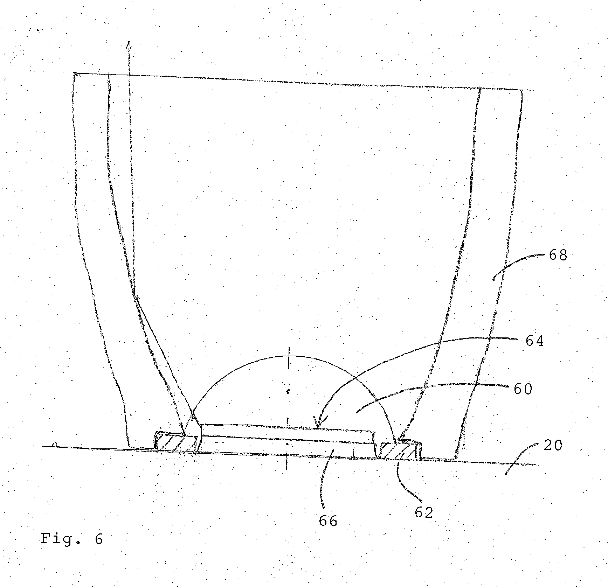

Fig. 6 zeigt en drittes Ausführungsbeispiel eines Reflektorkörpers 22, welcher hier zweiteilig, bestehend aus Ring bzw. Führungselement 62 und Reflektoraufsatz 68, ausgebildet ist, mit einem auf dem LED-Chip 14 aufgesetztem Linsenelement 60. In diesem Ausführungsbeispiel ist der LED-Chip 14 über ein Sockelelement 66 mit der Substratoberfläche verbunden, beispielsweise einem Lötsockel, einem Wäremleitsockel oder einer anderen Art von Verbindungssockel, wodurch die geometrische und optische Anordnung des LED-Chips 14 innerhalb des Reflektorkegels 22 und die mechanische Verankerung des LED-Chips 14 auf dem Substrat 20 verbessert und die Wärmeableitung verbessert wird.

Um dieses Sockelelement 66 herum, und zumindest teilweise mit diesem in Anlage ist ein vorzugsweise metallischer Ring 62 angeordnet, der durch das Sockelelement 66 zwangspositioniert und zentriert werden kann. Zugleich ist hier der Ring 62 zur exakten Positionierung des Reflektorkörpers 22 vorgesehen, wofür der Reflektorkörper 22 eine mit der Außenkontur des Ringes korrespondierende Nut in der Auflagefläche des Rings 62 auf dem Substrat 20 aufweist. Hierdurch gewährleistet dieser Ring 62 gleichzeitig eine Führungsfunktion, durch welche sich eine präzisere Positionierung der Bauteile und eine Verbesserung der optischen Ausrichtung erzielt werden kann und gleichzeitig die Montage vereinfacht und verbilligt werden kann. In diesem Ausführungsbeispiel ist vorgesehen, dass sich der Kunststofftropfen bis zur Innenkontur der substratseitigen Öffnung des Reflektorkörpers 22 ausbreitet.

## Patentansprüche

1. Lichthärtgerät für Dentalzwecke, mit einer Mehrzahl von Halbleiter-Lichtquellen, die je einen lichtemittierenden Chip (14; 16 und 18) aufweisen, welche Chips auf einem gemeinsamen Substrat (20) angebracht sind, wobei jeder Chip (14, 16 und 18) von einem einzelnen Reflektorkörper (22, 24 und 26) umgeben ist, der mit dem Substrat (20) in Verbindung steht, **dadurch gekennzeichnet, dass** wenigstens zwei Reflektorkörper (22, 24 und 26) nebeneinander derart angeordnet und durch einen Spalt (30, 32 und 34), der sich in gleicher Breite über eine gesamte Trennfuge zwischen den benachbarten Reflektorkörpern (22, 24 und 26) erstreckt, voneinander getrennt sind, dass sie thermisch und mechanisch entkoppelt sind.

2. Lichthärtgerät nach einem der vorhergehenden Ansprüche, **dadurch gekennzeichnet, dass** wenigstens die in Abstrahlrichtung weisende Oberfläche jedes lichtemittierenden Chips (14, 16 und 18) von jeweils einer Linse (60) aus transparentem, lichtbrechendem Material abgedeckt ist.

3. Lichthärtgerät nach einem der vorhergehenden Ansprüche, **dadurch gekennzeichnet, dass** die in Abstrahlrichtung weisende Oberfläche der Linse (60) im Wesentlichen kalotten- oder halbkugelförmig ausgebildet ist.

4. Lichthärtgerät nach einem der vorhergehenden Ansprüche, **dadurch gekennzeichnet, dass** der lichtemittierende Chip (14, 16 und 18) mit mindestens zwei seiner Ecken an dem Reflektorkörper (22, 24 und 26) anliegt und eine Relativposition zwischen dem Chip und dem Reflektorkörper (22, 24 und 26) festlegt.

5. Lichthärtgerät nach einem der vorhergehenden Ansprüche, **dadurch gekennzeichnet, dass** sich die Linse (60) bis zu einem auf dem Substrat (20) aufgebrachten Ring (62), welcher bis zu einer Innenkontur des Reflektorkörpers (22, 24 und 26) erstreckt.

6. Lichthärtgerät nach einem der vorhergehenden Ansprüche, **dadurch gekennzeichnet, dass** der Ring (62) vom lichtemittierenden Chip (14, 16 und 18) in radialer Richtung beabstandet ist.

7. Lichthärtgerät nach einem der vorhergehenden Ansprüche, **dadurch gekennzeichnet, dass** die Linse (60) die in Abstrahlrichtung weisende Oberfläche des Ringes (62) wenigstens teilweise abdeckt.

8. Lichthärtgerät nach einem der vorhergehenden Ansprüche, **dadurch gekennzeichnet, dass** der Ring (62) als integraler Bestandteil des Reflektorkörpers (22, 24 und 26) oder als supplementärer Bestandteil eines zumindest zweiteiligen Reflektorkörpers (22, 24 und 26) ausgebildet ist, wobei die zumindest aus Ring (62) und Reflektoraufsatz bestehenden Teile des Reflektorkörpers (22, 24 und 26) mechanisch und/oder stoffschlüssig miteinander verbunden sind.

9. Lichthärtgerät nach einem der vorhergehenden Ansprüche, **dadurch gekennzeichnet, dass** der Ring (62) als Führungselement für den lichtemittierenden Chip (14, 16 und 18) und/oder als Führungselement für den Reflektorkörper (22, 24 und 26) ausgebildet ist.

10. Lichthärtgerät nach einem der vorhergehenden Ansprüche, **dadurch gekennzeichnet, dass** die Reflektorkörper (22, 24 und 26) untereinander zumindest mechanisch entkoppelt sind.

11. Lichthärtgerät nach einem der vorhergehenden Ansprüche, **dadurch gekennzeichnet, dass** die Reflektorkörper (22, 24 und 26) in Wärmeleitverbindung mit dem Substrat (20) stehen, wobei die einzelnen Reflektorkörper (22, 24 und 26) enge Auflage auf dem Substrat (20) mit dem Substrat thermisch verbunden sind.

12. Lichthärtgerät nach einem der vorhergehenden Ansprüche, **dadurch gekennzeichnet, dass** die lichtemittierenden Chips (14, 16 und 18) mit dem Substrat (20) thermisch gekoppelt sind.

13. Lichthärtgerät nach einem der vorhergehenden Ansprüche, **dadurch gekennzeichnet, dass** die Reflektorkörper (22, 24 und 26) auch am substratseitigen Ende eine Öffnung aufweisen, die zur Einführung eines mit dem Substrat (20) verbunden lichtemittierenden Chips (14, 16 und 18) geeignet ist.

14. Lichthärtgerät nach einem der vorhergehenden Ansprüche, **dadurch gekennzeichnet, dass** die Aussenumkreisflächen im Bereich der oberen Abschlussflächen zumindest jeweils zweier Reflektorkörper (22, 24 und 26) einander schneiden, wobei der zwischen zwei Reflektorkörpern gebildete Spalt eine Fläche aufspannt.

15. Lichthärtgerät nach einem der vorhergehenden Ansprüche, **dadurch gekennzeichnet, dass** einander benachbarte Reflektorinnenflächen nicht miteinander verschnitten sind.

## Claims

1. A light hardening device for dental purposes, comprising a plurality of semiconductor light sources each having a light emitting chip (14; 16 and 18), which chips are mounted on a common substrate (20), each chip (14, 16 and 18) being surrounded by a single reflector body (22, 24 and 26) which is connected to the substrate (20), **characterized in that** at least two reflector bodies (22, 24 and 26) are adjacently mounted on a common substrate (20), 24 and 26) and are separated from each other by a gap (30, 32 and 34) which extends in the same width across an entire parting line between the adjacent reflector bodies (22, 24 and 26), such that they are thermally and mechanically decoupled.

2. The light hardening device according to one of the preceding claims, **characterized in that** at least the surface of each light emitting chip (14, 16 and 18) facing in the direction of radiation is covered by a respective lens (60) of transparent, light-refracting material.

3. The light hardening device according to one of the preceding claims, **characterized in that** the surface of the lens (60) facing in the direction of radiation is substantially dome-shaped or hemispherical.

4. The light hardening device according to one of the preceding claims, **characterized in that** the light emitting chip (14, 16 and 18) rests against the reflector body (22, 24 and 26) with at least two of its corners and determines a relative position between the chip and the reflector body (22, 24 and 26).

5. The light hardening device according to any of the foregoing claims, **characterized in that** the lens (60) extends up to a ring (62) applied to the substrate (20) and extending up to an inner contour of the reflector body (22, 24 and 26).

6. The light hardening device according to any of the foregoing claims, **characterized in that** the ring (62) is radially spaced from the light emitting chip (14, 16 and 18).

7. The light hardening device according to one of the preceding claims, **characterized in that** the lens (60) at least partially covers the surface of the ring (62) facing in the direction of radiation.

8. The light hardening device according to one of the preceding claims, **characterized in that** the ring (62) is formed as an integral component of the reflector body (22, 24 and 26) or as a supplementary component of an at least two-part reflector body (22, 24 and 26), wherein the parts of the reflector body (22, 24 and 26) consisting at least of the ring (62) and the reflector attachment are mechanically and/or firmly connected to each other.

9. The light hardening device according to one of the preceding claims, **characterized in that** the ring (62) is designed as a guide element for the light emitting chip (14, 16 and 18) and/or as a guide element for the reflector body (22, 24 and 26).

10. The light hardening device according to one of the preceding claims, **characterized in that** the reflector bodies (22, 24 and 26) are at least mechanically decoupled from each other.

11. The light hardening device according to one of the preceding claims, **characterized in that** the reflector bodies (22, 24 and 26) are in heat-conducting connection with the substrate (20), the individual reflector bodies (22, 24 and 26) being thermally connected to the substrate (20) by close contact with the substrate.

12. The light hardening device according to any of the preceding claims, **characterized in that** the light emitting chips (14, 16 and 18) are thermally coupled to the substrate (20).

13. The light hardening device according to one of the preceding claims, **characterized in that** the reflector bodies (22, 24 and 26) have as well an opening at the substrate sided end which is suitable for insertion of a light emitting chip (14, 16 and 18) connected to the substrate (20).

14. The light hardening device according to one of the preceding claims, **characterized in that** the outer circumferential surfaces intersect each other in the region of the upper connection surfaces of at least two reflector bodies (22, 24 and 26) in each case, wherein the gap formed between two reflector bodies spans a surface.

15. The light hardening device according to one of the preceding claims, **characterized in that** adjacent reflector inner surfaces are not intersected with each other.

## Revendications

1. Dispositif de photopolymérisation pour des applications dentaires, avec une pluralité de sources de lumière à semi-conducteurs, qui présentent chacune une puce émettrice de lumière (14 ; 16 et 18), où lesdites puces sont montées sur un substrat commun (20), où chaque puce (14, 16 et 18) est entourée par un seul corps réflecteur (22, 24 et 26) qui est relié au substrat (20), **caractérisé en ce qu'**au moins deux corps réflecteurs (22, 24 et 26) sont disposés côte à côte et séparés les uns des autres par une fente (30, 32 et 34) qui s'étend sur la même largeur par une ligne de séparation entre les corps réflecteurs adjacents (22, 24 et 26) de telle manière qu'ils sont découplés thermiquement et mécaniquement.

2. Dispositif de photopolymérisation selon l'une des revendications précédentes, **caractérisé en ce qu'**au moins la surface de chaque puce émettrice de lumière (14, 16 et 18) orientée dans la direction d'émission est recouverte par une lentille respective (60) en matériau transparent et réfringent.

3. Dispositif de photopolymérisation selon l'une des revendications précédentes, **caractérisé en ce que** la surface de la lentille (60) orientée dans la direction du rayonnement est essentiellement sphérique semi-sphérique.

4. Dispositif de photopolymérisation selon l'une des revendications précédentes, **caractérisé en ce que** la puce émettrice de lumière (14, 16 et 18) repose par au moins deux de ses coins contre le corps réflecteur (22, 24 et 26) et détermine une position relative entre la puce et le corps réflecteur (22, 24 et 26).

5. Dispositif de photopolymérisation selon l'une des revendications précédentes, **caractérisé en ce que** la lentille (60) s'étend jusqu'à une bague (62) appliqué sur le substrat (20), qui s'étend jusqu'à un contour intérieur du corps réflecteur (22, 24 et 26).

6. Dispositif de photopolymérisation selon l'une des revendications précédentes, **caractérisé en ce que** la bague (62) est espacée de la puce émettrice de lumière (14, 16 et 18) en direction radiale.

7. Dispositif de photopolymérisation selon l'une des revendications précédentes, **caractérisé en ce que** la lentille (60) recouvre au moins partiellement la surface de l'anneau (62) orientée dans la direction du rayonnement.

8. Dispositif de photopolymérisation selon l'une des revendications précédentes, **caractérisé en ce que** la bague (62) est réalisé en tant que composant intégral du corps réflecteur (22, 24 et 26) ou en tant que composant supplémentaire d'un corps réflecteur (22, 24 et 26) au moins en deux parties, où les parties du corps de réflecteur (22, 24 et 26) constituées au moins de l'anneau (62) et de la fixation du réflecteur sont reliées entre elles mécaniquement et/ou matériellement.

9. Dispositif de photopolymérisation selon l'une des revendications précédentes, **caractérisé en ce que** la bague (62) est conçue comme élément de guidage pour la puce émettrice de lumière (14, 16 et 18) et/ou comme élément de guidage pour le corps réflecteur (22, 24 et 26).

10. Dispositif de photopolymérisation selon l'une des revendications précédentes, **caractérisé en ce que** les corps réflecteurs (22, 24 et 26) sont découplés au moins mécaniquement les uns des autres.

11. un dispositif de photopolymérisation selon l'une des revendications précédentes, **caractérisé en ce que** les corps réflecteurs (22, 24 et 26) sont en liaison thermiquement conductrice avec le substrat (20), où les différents corps réflecteurs (22, 24 et 26) sont en contact étroit avec le substrat (20).

12. dispositif de photopolymérisation selon l'une des revendications précédentes, **caractérisé en ce que** les puces émettrices de lumière (14, 16 et 18) sont couplées thermiquement au substrat (20).

13. Dispositif de photopolymérisation selon l'une des revendications précédentes, **caractérisé en ce que** les corps réflecteurs (22, 24 et 26) présentent également une ouverture à l'extrémité située côté substrat qui est appropriée pour l'insertion d'une puce émettrice de lumière (14, 16 et 18) reliée au substrat (20).

14. Dispositif de photopolymérisation selon l'une des revendications précédentes, **caractérisé en ce que** les surfaces périphériques extérieures se croisent dans la zone des faces frontales supérieures d'au moins deux corps réflecteurs (22, 24 et 26), où la fente formée entre deux corps réflecteurs définit une surface.

15. Dispositif de photopolymérisation selon l'une des revendications précédentes, **caractérisé en ce que** les surfaces intérieures des réflecteurs adjacentes ne sont pas croisées entre elles.
